Europäisches Patentamt

European Patent Office

Office européen des brevets

(11) Veröffentlichungsnummer: **0 266 542 B1**

(12) **EUROPÄISCHE PATENTSCHRIFT**

(45) Veröffentlichungstag der Patentschrift: **06.05.92**

(21) Anmeldenummer: **87114079.4**

(22) Anmeldetag: **26.09.87**

(51) Int. Cl.⁵: **G01N 30/60**

(54) **Chromatographiesäule.**

(30) Priorität: **06.11.86 DE 3637916**

(43) Veröffentlichungstag der Anmeldung:
**11.05.88 Patentblatt 88/19**

(45) Bekanntmachung des Hinweises auf die
Patenterteilung:
**06.05.92 Patentblatt 92/19**

(84) Benannte Vertragsstaaten:
**AT BE CH DE ES FR GB GR IT LI LU NL SE**

(56) Entgegenhaltungen:
EP-A- 0 023 582      EP-A- 0 068 343
EP-A- 0 131 791      CH-A- 509 591
DE-A- 2 132 686      DE-A- 2 348 071
DE-A- 2 945 180      DE-B- 1 278 401
DE-U- 8 629 692

"LATEK - Säulen - Ventile - Fittings", März
1982, Prospekt der Firma LATEK
Labortechnik-Geräte GmbH, Heidelberg (DE)

(73) Patentinhaber: **LABOMATIC GmbH**
**Sunnisheimring 83-85**
**W-6920 Sinsheim(DE)**

(72) Erfinder: **Kronwald, Klaus**
**Schillerstrasse 29**
**W-6920 Sinsheim(DE)**

(74) Vertreter: **Patentanwälte Zellentin & Partner**
**Zweibrückenstrasse 15**
**W-8000 München 2(DE)**

**Beschreibung**

Die vorliegende Erfindung betrifft eine Chromatographiesäule.

Chromatographiesäulen werden zum Trennen von Stoffgemischen eingesetzt, wobei von der Eigenschaft von Gasen oder Flüssigkeiten Gebrauch gemacht wird, die in spezifischen Sorptionskoeffizienten besteht und sich in einer zu anderen Substanzen verschiedenen Retentionszeit bemerkbar macht. Für eine saubere Trennung ist dabei das Durchflußverhalten der flüssigkeiten durch die Säule von wesentlicher Bedeutung. Da oft chromatographische Trennungen unter Druck durchgeführt werden und sich hierdurch und auch durch andere Faktoren bedingte Bettvolumenänderungen einstellen, führt dies zu Inhomogenitäten in der Schüttung oder zwischen dieser und dem oberen Teil der Schüttung un dem Zulauf in Form von Totvolumen, wodurch ein reproduzierbarer, gerader Frontverlauf der fließfähigen Medien beeinträchtigt wird.

Druckverluste wirken ähnlich störend.

Vom Stand der Technik werden daher Dichtungen in Form von Gummi-O-Ringen verwendet, die auf den oberen Rand der Säule gelegt und durch eine die Zu- und Ableitungen beherbergenden Kappenverschraubung unter Abstützung unter dem verbreiterten Säulenrand auf diesen gequetscht werden.

Nachteilig bei den bekannten Chromatographiesäulen ist, daß durch die Art der Verschraubung eine Sichtkontrolle weder der Dichtung noch des Übergangs der Flüssigkeit aus dem Zulauf (Fritte) in das Chromatographiebett, und umgekehrt, erlauben.

Weiterhin kann der Abstand zwischen Bettoberfläche und Flüssigkeitszulauf nicht oder nicht ausreichend befriedigend überbrückt werden.

Aus der CH-A-509 591 ist eine "Abschlußeinrichtung für ein Chromatographierohr" bekannt geworden, bei welcher keilförmige, gummielastische Dichtungsringe mit Hilfe eines Pfropfens, einer Distanzhülse und eines Preßgliedes und über ineinander geführte Rohre gegen den Innenmantel gepreßt werden, um den Flüssigkeitseintritt in das Chromatographierohr bzw. dessen Austritt nach außen abzudichten.

Dabei ist der Anschluß nach dem Entlasten der Dichtungsringe durch Verschieben im Rohr höhenverstellbar.

Diese Vorrichtung ist auf die Anwendung niedriger Drücke beschränkt. Zum einen ist der Anschluß im Rohr nicht gegen durch hohen Druck erzeugte Bewegung sicherbar, zum anderen kann keine Hochdruckkapillare angeschlossen werden. Desweiteren ist der Flüssigkeitsaustritt offen, womit Inhomogenitäten um Fluß unvermeidlich sind. Dabei ist eine befriedigende Sichtkontrolle wegen des eng begrenzten Flüssigkeitsaustrittes ebenfalls nicht möglich.

Aus "Latek-Säulen-Ventile, Fitting 3/1982", Prospekt der Firma Latek Labortechnik-Geräten GmbH, Heidelberg, ist weiterhin eine höhenverstellbare Chromatographiesäule bekannt.

Sie besteht aus einem aus Glas gefertigten Rohr mit abdichtenden Anschlußstücken und endseitigen Flanschen. Die Anschlußstücke sind mit dem Rohr mit Hilfe einer Verschraubung verbindbar und weisen ein zentrales Rohr mit einer gegen den Innenmantel des Glasrohres abdichtenden Preßfläche auf. Das Rohr ist von einer Hülse mit einer entsprechenden Preßfläche umgriffen, zwischen den Preßflachen ist eine quetschbare Dichtung angeordnet, wobei die Hülse an einer Verschraubung abgestützt ist.

Der Übergang auf das Bett besteht dabei aus einem Verteilerstempel, der an seinem dem Bett zugekehrten Ende einen Gewebeeinsatz tragt. Die Schlauchanschlüsse zur Zu- und Ableitung der Flüssigkeiten bestehen aus einer endseitigen Schlauchverschraubung, bei der zwei T-förmig aufgeweitete Teflonschläuche mit Hilfe einer Gewindekupplung gegen Edelstahlscheiben gepreßt werden.

Die Dichtung ist relativ weit vom Übergang auf das Bett entfernt, was unerwünschtes Totvolumen verursacht.

Nachteilig bei dieser Säule ist insbesondere der komplizierte, vieleilige Aufbau des Bettübergangs, der Dichtung und der Schlauchanschluß sowie der auf niedrige Drücke beschränkte Arbeitsbereich, darüber hinaus kann sich der Bettübergang bei der Höhenverstellung verdrehen.

Die vorliegende Erfindung hat sich daher die Aufgabe gestellt, eine auch für hohe Drücke geeignete Chromatographiesäule zu schaffen, die einen sicheren Einblick in die Übergangszone zwischen Zulauf und Bett ebenso wie eine Sichtkontrolle der Dichtung ermöglicht. Dabei sollen auch große Totzonen zwischen Zulauf und Bett überbrückt werden können, d.h. der Zulauf soll genau in Abhängigkeit von den jeweils herrschenden Druckverhältnissen und dem Bettvolumen positioniert werden können.

Des weiteren soll die Säule im Aufbau einfach und einfach zu handhaben sein, höhere Arbeitsdrücke zulassen und einen höheren Wirkungsgrad aufweisen.

Die Lösung dieser Aufgabe gelingt bei einer Chromatographiesäule, bestehend aus einem aus Glas gefertigten Zylinder mit abdichtenden Anschlußstücken, wobei der Zylinder je endseitige Flansche aufweist, mit deren Hilfe die Anschlußstücke mit dem Zylinder durch eine Verschraubung verbindbar sind und die Anschlußstücke ein zentrales Rohr mit einer Preßfläche aufweisen, das von einer Hülsenanordnung mit einer entsprechenden entgegengerichteten Preßfläche umgriffen ist, und wobei zwischen den Preßflächen eine quetschbare Dichtung angeordnet ist, die eine freie Sichtkontrolle auf die Dichtung ermöglicht und eine Hülse der Hülsenanordnung an der Verschraubung abgestützt ist, wobei das zentrale Rohr eine Frittenausnehmung aufweist, in der eine Fritte gehalten ist, das zentrale Rohr ein die Verschraubung durchgreifendes Gewinde aufweist und mit einer Mutter auf dem oberen Teil der Anschlußstücke fixierbar ist, das zentrale Rohr geteilt ist und ein Oberteil und ein Unterteil mit einer Innenverschraubung und einen zwischen den beiden Teilen einklemmbaren Schlauchverbinder aufweist und zwischen der Hülse und dem Unterteil des zentralen Rohres eine auf dem Unterteil bewegliche Muffe der Hülsenanordnung angebracht ist, wobei die Muffe die Preßfläche trägt, sich gegen die Hülse abstützt und gegenüber der Hülse gegen Verdrehen gesichert ist.

Weitere erfindungsgemäße Merkmale finden sich in den Unteransprüchen.

Bei dieser Vorrichtung ist zum einen die Dichtung in das Innere der Säule und in den Bereich des Zulaufs des zu trennenden Gemisches auf das Bett verlegt. Durch die konstruktionsbedingte Quetschvorrichtung wird von drei Flächen aus auf den O-Ring eingewirkt und dieser vom Rohr weg gegen den Glasmantel der Säule gedrückt und ist so in der Lage, große Fertigungstoleranzen zu überbrücken. Unterstützt wird dieser Vorgang durch die vorzugsweise Ausbildung der Preßringe als Kegelflächen.

Durch die Positionierung des Zulaufs mit Hilfe der Hülse, die gleichzeitig am unteren Ende Teil der Dichtungsmechanik ist, läßt sich zweierlei erreichen.

Einmal kann die Länge der Hülse die Verschraubung überragen und so die Sichtkontrolle auf Dichtung und Zulauf gewährleisten. Zum anderen kann durch einfaches Auswählen der Hülsenlänge nunmehr der Zulauf, d.h. die Fritte in genau vorgebbarem Abstand von der Kolonnenoberkante gewählt, d.h. auf das Bett abgestimmt werden.

Für die Systemdichtigkeit ist neben der Säulenabdichtung auch die Abdichtung des Flüssigkeitszulaufs in die Verschraubung, d.h. in vorliegendem Falle in das Rohr von Bedeutung.

Die besonders hoch druckfeste Zuführung besteht erfindungsgemäß darin, daß das Rohr geteilt ist und eine Innenverschraubung und einen zwischen den beiden Teilen einklemmbaren Schlauchverbinder, z.B. in Form eines Konus, auf den die Zuleitung geschoben wird und einen außen aufgesetzten Gegenkonus aufweist, der durch die Verschraubung des geteilten Rohres gehalten wird.

Die vorliegende Erfindung bietet weiterhin eine einfache und wirksame Möglichkeit der Höhenverstellung des Rohre bzw. dessen Flüssigkeitsaustrittes.

Dazu ist lediglich erforderlich, das Verschraubungsoberteil und die Hülse mit miteinander wirkenden Gewinden zu versehen, sie nach oben über das Verschraubungsoberteil hinausragen zu lassen und die Mutter nicht auf das letztgenannte Teil, sondern auf die Hülse abzustützen, um die erforderliche Zugkraft für die Quetschdichtung herzustellen.

Ein weiterer Vorteil besteht darin, daß nicht die Hülse selbst in die Preßfläche für die Quetschdichtung ausläuft, sondern, daß sich diese auf einer separaten Muffe befindet, wobei die Hülse von oben und das den Fritteneinsatz tragende Unterteil des Rohres gegen diese stößt. Insbesondere kann dadurch natürlich der Hülsendurchmesser gesenkt werden, ohne daß unerwünschte Verformungen in den (Kegel)Preßflächen auftreten und so Material gespart werden, das hinsichtlich des gesamten Einsatzes vorzugsweise aus Polytetrafluorethylen besteht.

Gleichzeitig entsteht eine Gleitfläche zwischen Muffe und Hülse, so daß bei einem Drehen der Hülse, Muffe und Quetschdichtung ortsfest verbleiben können.

Für eine Betätigung der Höhenverstellung und der Quetschdichtung ist vorgesehen, sowohl Hülse als auch Rohr bzw. dessen Oberteil mit Handgriffen, z.B. in Form von Rändelscheiben zu versehen, die mit ihren entsprechenden Gewindeteilen drehfest verbunden sind.

Als Dichtung hat sich ein O-Ring aus Gummi bewährt, dessen Dicke dem zu überwindenden Abstand zwischen den Preßringen und der Glaswandung anzupassen ist.

Die vorliegende Erfindung erlaubt jedoch auch in besonderer Ausgestaltung den Einsatz von Kunststofflippendichtungen, wobei die Preßflächen (vorzugsweise aus PTFE) konisch ausgebildet sind, so daß sie einen zwischen ihnen angeordneten Einsatz, der außen die Lippen trägt derart stauchen, daß die Lippen radial gespreitet und fest gegen die Glaswandung gelegt werden. Vorzugsweise sind dabei die Lippen in an sich bekannter Weise geneigt ausgebildet, wobei sich der Winkel zur Längsachse dem Preßdruck entsprechend verändert.

**Figur 1**
zeigt im wesentlichen den erfindungsgemäßen Aufbau im Schnitt
**Figur 2 und 3**
zeigen höhenverstellbare Varianten
**Figur 4**
zeigt eine Lippenquetschdichtung
**Figur 5**

zeigt eine Dichtung mit Abstreifkrone
**Figur 6**
zeigt eine Anordnung eines Kühlmantels
**Figur 7**
zeigt eine Sicherung mit Hilfe von Zugstangen
**Figur 8**
zeigt eine Variante mit Anschlüssen an eine asymmetrische Säule.

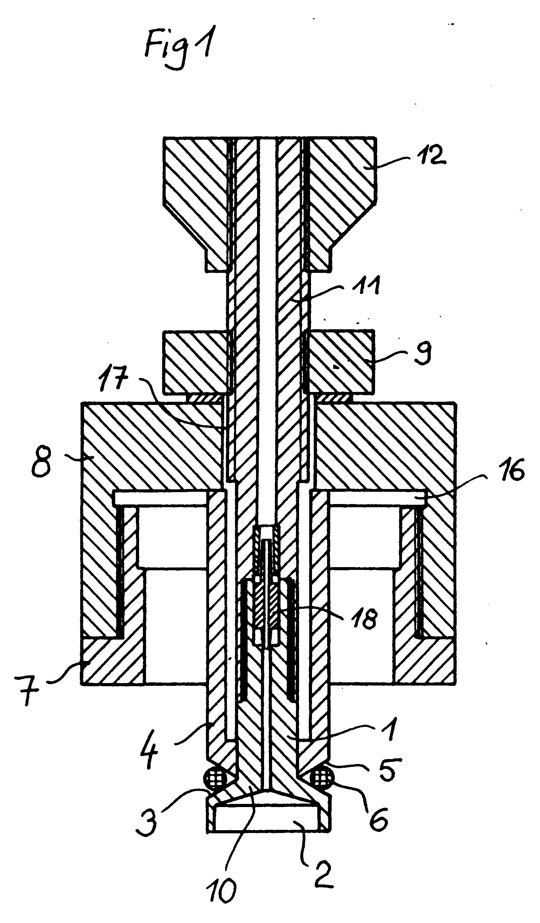

**Figur 1.** Dargestellt ist ein endseitiger unterer, nicht in allen Merkmalen dem Hauptanspruch entsprechender Anschluß einer Chromatographiesäule an eine Flüssigkeitszufuhr, wobei die besondere Konstruktion auch diese unter erhöhtem oder hohem Druck erlaubt. Verschraubungsunter- 7 und -oberteil 8 stützen sich ab auf endseitigen Flanschen 16 einer Chromatographiesäule, die vorzugsweise aus Glas besteht. Das Verschraubungsoberteil 8 ist zentral durchbrochen und durch diesen Durchbruch 17 ist ein Rohr 1 geführt, über das man das aufzutrennende Gemisch zuleitet bzw. gegenüberliegend die getrennten Komponenten abgeführt werden.

Dieses Rohr ist Vorzugsweise in ein untereinander verschraubbares Rohroberteil 11 und Rohrunterteil 10 geteilt, wobei dazwischen eine Schlauchklemme 18 gehalten ist. Die Flüssigkeitszufuhr geschieht hierbei über einen Kunststoffschlauch, der in den Hohlraum des Rohroberteils 11 eingeschoben und mit Hilfe der Schlauchklemme 18 angeschlossen und gesichert ist.

Das dem Säulenbett zugewandte Ende des Rohrunterteils 10 ist zu einer Frittenausnehmung 2 erweitert. Diese Erweiterung besitzt eine darüberliegende Preßfläche, die hier vorzugsweise als Kegel 3 ausgebildet ist.

Das Rohr 1 beziehungsweise dessen Oberteil 11 besitzt ein den Durchbruch 17 des Verschraubungsoberteiles 8 durchgreifendes Gewinde, auf dem eine (Rändel)mutter 9 angeordnet ist. Kopfseitig ist ein Handgriff 12 dargestellt.

Koaxial zum Rohr 1 ist eine dieses umgreifende Hülse 4 angeordnet, die nach unten in eine Preßfläche, hier den Kegel 5, ausläuft, der auf den Kegel 3 des Rohrunterteils 10 stößt. Zwischen den Kegeln 3 und 5 befindet sich eine Quetschdichtung 6, die als Gummi-O-Ring dargestellt ist.

Die Hülse 4 stößt mit ihrem gegenüberliegenden Ende geben die Unterseite des Verschraubungsoberteils 8. Durch Anziehen der Mutter 9 wird das Rohr 1 gehoben und gleichzeitig die Hülse 4 gegen das Verschraubungsoberteil gedrückt. Dadurch bewegen sich die Kegel 3 und 5 aufeinander zu und quetschen den O-Ring gegen die Säulenwandung.

Die Länge der Hülse 4 ist so bemessen, daß Dichtung 6 und Fritte bzw. Frittenausnehmung 2 unterhalb des Verschraubungsunterteils 7 liegen, so daß eine einwandfreie Sichtkontrolle auf das fließende Medium möglich ist und Inhomogenitäten und/oder Undichtigkeiten sofort entdeckt werden können.

In Vorstehendem beziehen sich "oben" und "unten" auf die Darstellung der Fig.1. Die Säule besitzt gegenüberliegend die gleiche Anordnung, wobei sich die Begriffe umkehren.

In weiterer, besonders bevorzugter Ausbildung, ist der Abstand zwischen Verschraubung 7,8 und Säulenbettoberkante veränderlich ausgebildet, so daß dieser optimiert werden kann. Dazu weist die Hülse 4 ein mit einem entsprechenden Gewinde des Verschraubungsoberteils greifendes eigenes Gewinde auf, wobei die Hülse 4 durchgeschraubt ist und nach oben hin das Verschraubungsoberteil überragt und ggf. einen Handgriff aufweist. Mit diesem Handgriff wird die Höhenverstellung vorgenommen.

Die Mutter 9 stößt dann zur Herstellung der Quetschdichtung nicht auf das Verschraubungsoberteil 8, sondern auf die Oberkante der Hülse 4.

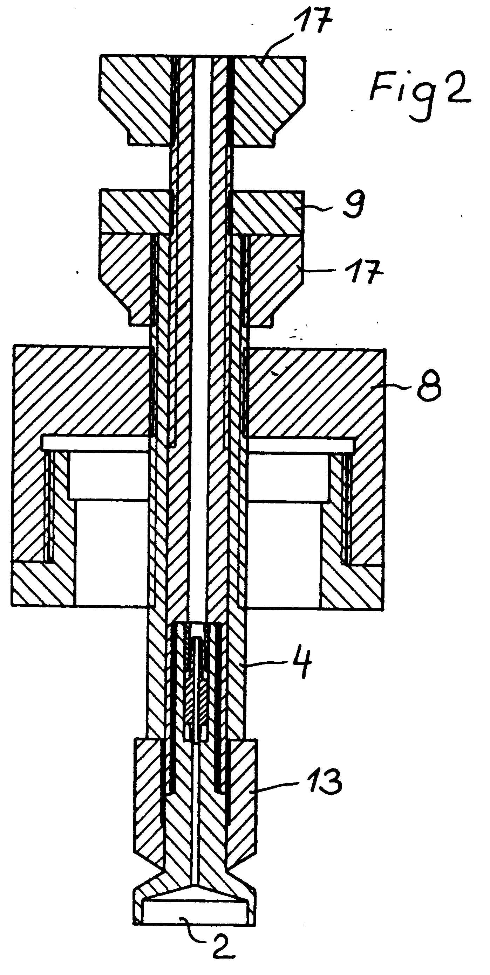

**Fig. 2.** Die Höhenverstellbarkeit kann grundsätzlich dadurch bewirkt werden, daß die Hülse 4 das Verschraubungsoberteil 8 verschiebbar durchgreift, über das Gewinde des Rohres 1 bzw. Rohroberteiles 11 ragt und daß die Mutter 9 sich auf die Hülse 4 abstützt, um die Dichtung 6 nach außen gegen die Glasinnenwandung zu drücken. Zur Verstellung des Austritts bzw. zur Positionierung der Fritte 2 ist lediglich erforderlich, die Mutter 9 zu lösen und den gesamten Einsatz auf- oder abzuschieben.

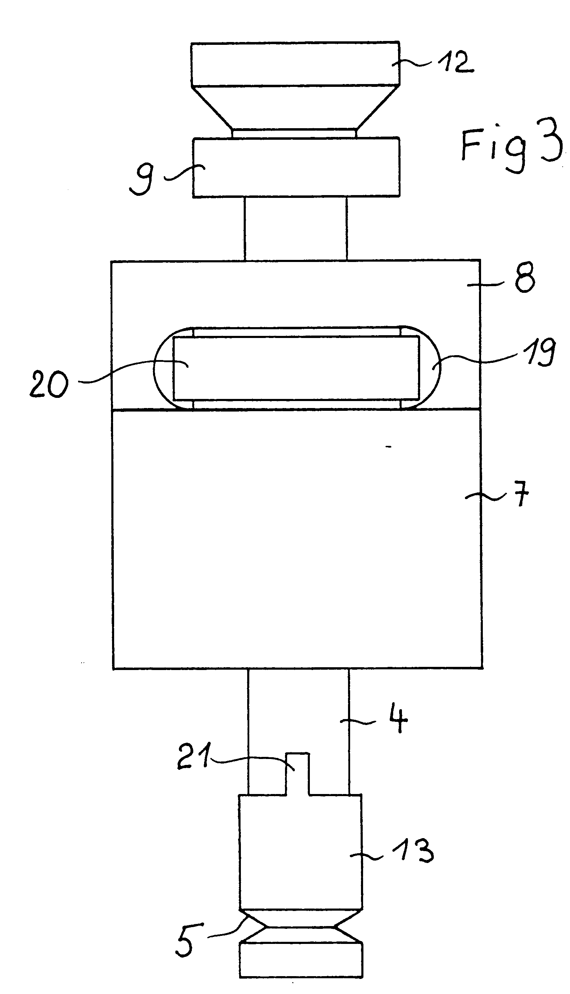

**Fig. 3** zeigt eine Variante der Höhenverstellung, bei der die Positionierung der Fritte bzw. deren Ausnehmung mit Hilfe der Gewinde von Verschraubungsoberteil 8 und Hülse 4 vorgenommen wird. Dabei wird die Hülse 4 im Gewinde der Verschraubung 8 gedreht und auf- oder abbewegt im Maße der Gewindeganghöhe. Grundsätzlich kann dies durch lockern der Mutter 9 und anschließendes Drehen der Hülse 4 geschehen.

Unter Arbeitsbedingungen besteht jedoch so die Gefahr von Druck-und Flüssigkeitsverlusten, weswegen wie dargestellt vorgeschlagen wird, die Hülse in dem Verschraubungsoberteil verschieblich anzuordnen (Fig.3) und statt dessen eine Verstellmutter 20 im Verschraubungsoberteil 8 anzuordnen und sie durch Fenster 19 im Verschraubungsoberteil zu betätigen. Diese stützt sich bei Abwärtsbewegung gegen den oberen Rand des Oberteils 8 und bei Aufwärtsbewegung gegen den Flansch 16 (Fig.1) ab. Die Verstellung kann dabei unter angezogener Dichtung vorgenommen werden. Die Verstellmutter besitzt hierfür peripher verteilte Bohrungen, in die ein Hebel gesteckt wird, um sie auch gegen den Widerstand der angezogenen Dichtung benutzen zu können.

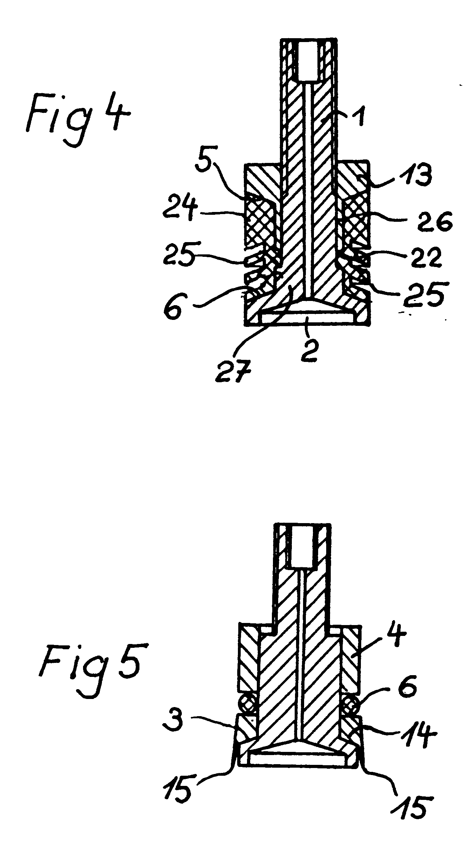

**Fig. 4** zeigt eine Ausführungsform der Dichtung aus Kunststoff (PTFE) bei der auf einen Gummi-O-Ring verzichtet werden kann. Die Muffe 13 besitzt eine Kegelfläche 5, ebenso wie das die Frittenausnehmung 2 tragende Ende des Rohres 1, die mit 6 bezeichnet ist. Zusätzlich können weitere gegensinnige Kegelflächen 22, 23 vorgesehen sein.

Der Lippendichtungseinsatz 24 besitzt schräg gestellte Dichtungslippen 25. Beim Spannen der Dichtung werden die Kegelflächen 5 der Muffe und 6 des Rohres aufeinanderzubewegt und der Lippendichtungseinsatz 13 wird gestaucht. Dadurch verändert sich zum Umfang des Einsatzes auch der Einstellwinkel der Lippen 25, die gegen die Wandung der Chromatographiesäule gedrückt werden und solcherart abdichten. Die Materialstärke des Einsatzes 24 kann dadurch variiert werden, daß Muffe 13 und Rohr Vorsprünge 26 und 27 besitzen. Diese sind abhängig vom elastischen oder Fließverhalten des für den Lippendichtungseinsatz verwendeten Materials zu dimensionieren.

**Fig 5** zeigt eine kombinierte Dichtungsvorrichtung, wobei ein O-Ring 6 zwischen die Hülse 4 (oder auch der Muffe 13; nicht dargestellt) und einem Abstreifring 14 mit Krone 15 eingelegt ist. Der Abstreifring 14 beistzt eine dem Kegel 3 angepaßte Gegenfläche und die nach unten abstehende Krone 15. Unter Druck weiten sich sowohl O-Ring 6 als auch Krone 15.

Der Vorteil dieser Ausführungsform liegt einmal in der Möglichkeit beim Einschieben des gesamten Einsatzes an der Rohrwandung etwa anhaftendes Material abstreifen zu können und zusätzlich über eine zweite, sich mit steigendem Innendruck verbessernde, zusätzliche Dichtung zu verfügen, so daß auch bei Lockerung (und damit durch geringeren Gleitwiderstand) des Preßdruckes zwischen Hülse 4 und Lippendichtungseinsatz 14 eine leichtere Höhenverstellung ohne Druckverlust befürchten zu müssen, möglich ist, was auch für die Ausführungsform gem. Fig. 4 zutrifft, so daß diesen Varianten in Bezug auf die Höhenverstellung gem. Fig.3 besondere Bedeutung zukommt.

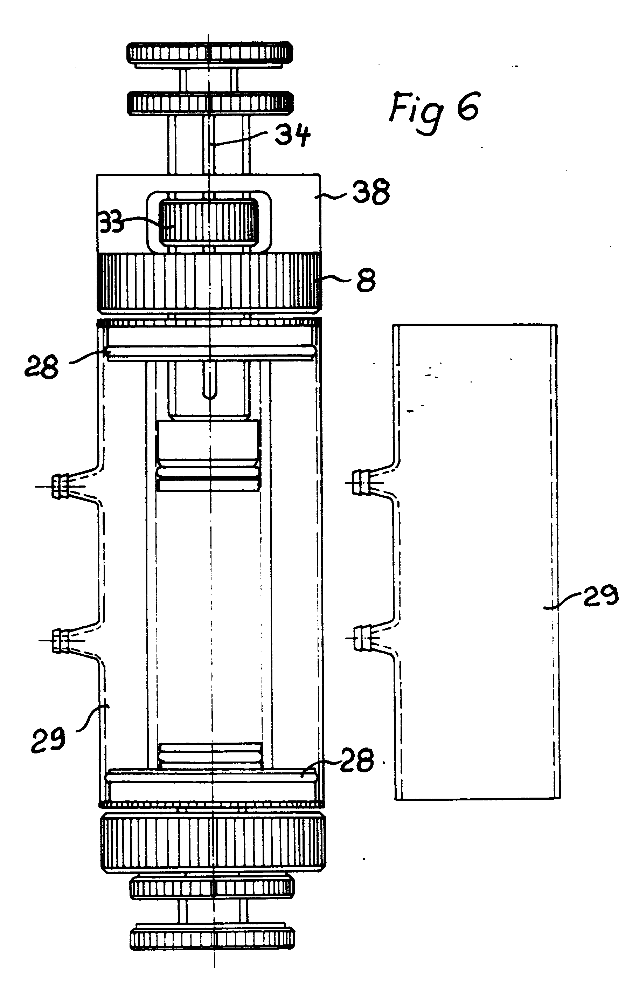

**Fig. 6.** In manchen Fällen besteht die Notwendigkeit, aus dem Säuleninneren Wärme abzuführen oder in analoger Weise zu erwärmen, bzw. zu temperieren. Für diesen Fall wird die Verschraubung beidendig mit äußeren Gummi-Dichtringen 28 versehen, gegen die der Kühlmantel 29 anliegt.

In der Darstellung ist die Verschraubung derart gewählt, daß lediglich die obere längenveränderlich, d.h. dem Bettvolumen anpaßbar ausgebildet ist, wozu der Verstellring 33 dient.

In dieser Darstellung ist die Führungsnut 34 erkennbar. In diese greift eine Drehsicherung in Form einer Nase oder eines (eingeschraubten) Stiftes ein und führt die Hülse bzw. den gesamten Einsatz vertikal. Die Sicherung kann in den stehenden Teilen, wie z.b. dem Verschraubungsoberteil 8 oder dem als Anschlag wirkenden Bügel 38 untergebracht werden.

Im Falle der Verwendung einer mit Flanschen zusammenwirkenden Verschraubung ist das Säuleninnere gegen die Kühlflüssigkeit mit einer an das dort beschriebene Verschraubungsunterteil anliegenden Dichtung zu versehen.

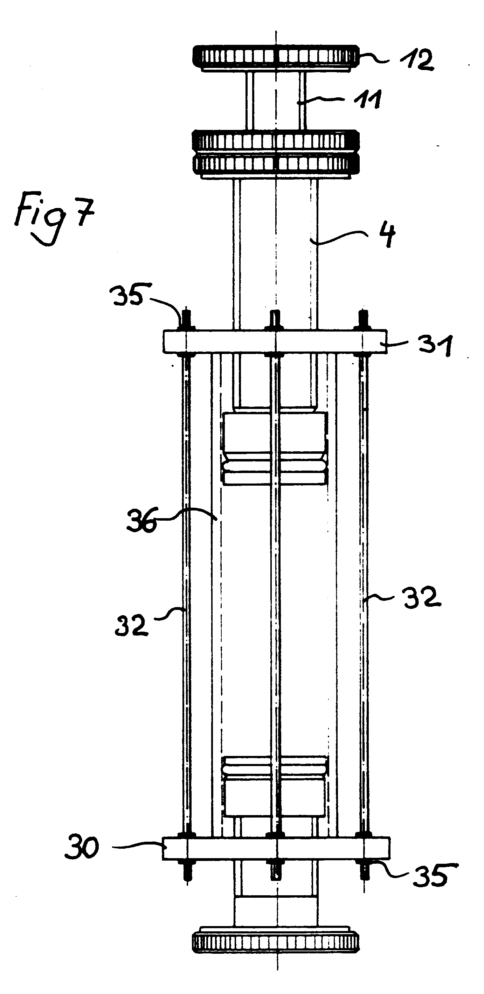

**Fig. 7** zeigt eine Variante der Verschraubung, bei der das Verschraubungsoberteil je durch Teller 30, 31 ersetzt sind, die über mit Gewinden und Muttern 35 versehenen Zugstangen 32 zusammengehalten werden. Diese Ausführung dient insbesondere der Aufnahme von hohen Drücken im Inneren der Säule 36, die hier keine Flansche für die Verschraubung aufweist.

Die Teller besitzen zentrale Bohrungen mit Innengewinden auf, in die die Hülse 4 eingreift. Aus der Hülse 4 ragt das Rohr 11 mit dem Handgriff 12.

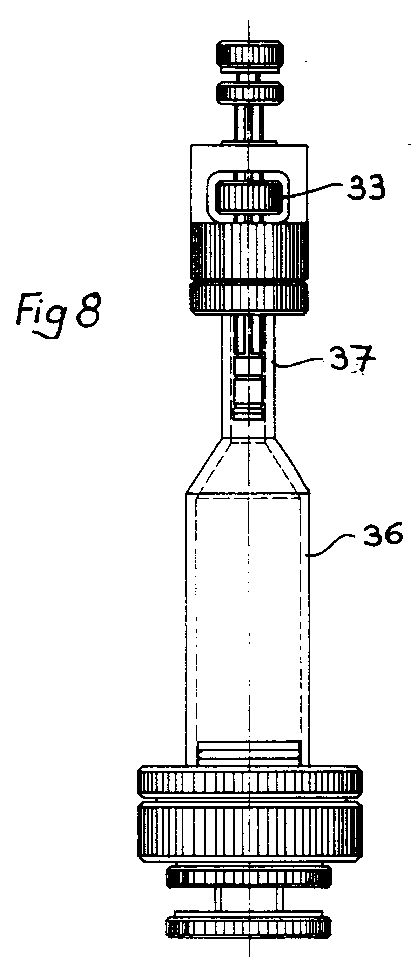

**Fig. 8** zeigt eine Variante, bei der die Säule 36 eine obere Verjüngung 37 aufweist. Diese asymmetrische Form erfordert unterschiedliche obere und untere Verschraubungen, wobei im dargestellten Falle die Längenänderung, d.h. die Anpassung an das Bett, über die obere Verschraubung bzw. die Rändelschraube 33 vorgenommen wird.

In jedem der vorstehend beschriebenen Fälle, ist eine einwandfreie Sichtkontrolle auf den Bereich zwischen den Fritten un dem Übergang aus diesen auf das Trennmittelbett gewährleistet und somit die Möglichkeit gegeben, über die erfindungsgemäße Verstelleinrichtung Totzonen zu vermeiden und so die Effektivität der Chromatographie erheblich zu verbessern.

Die vorliegende Erfindung eignet sich im Zusammenhang mit unterschiedlichen Glasmaterialien und Säulenoberteilen von 2 bis 300 mm Durchmesser.

Die Zuleitung ist ohne weiteres metallfrei zu gestelten, da alle flüssigkeitsberührten Teile aus Kunststoff herstellbar sind.

Der Verstellweg kann dabei ohne weiteres bis 40 cm betragen, es können daher auch extreme Größen für die Säulen gewählt werden.

**Patentansprüche**

1.  Chromatographiesäule, bestehend aus einem aus Glas gefertigten Zylinder mit abdichtenden Anschlußstücken (7, 8), wobei der Zylinder je endseitige Flansche aufweist, mit deren Hilfe die Anschlußstücke (7, 8) mit dem Zylinder durch eine Verschraubung verbindbar sind und die Anschlußstücke (7, 8) ein zentrales Rohr (1, 10, 11) mit einer Preßfläche (3) aufweisen, das von einer Hülsenanordnung (4, 13) mit einer entsprechenden entgegengerichteten Preßfläche (5) umgriffen ist, und wobei zwischen den Preßflächen (3, 5) eine quetschbare Dichtung (6) angeordnet ist, die eine freie Sichtkontrolle auf die Dichtung ermöglicht, und eine Hülse (4) der Hülsenanordnung an der Verschraubung abgestützt ist, **gekennzeichnet durch** die folgenden Merkmale

a) das zentrale Rohr (1) weist eine Frittenausnehmung (2) auf, in der eine Fritte gehalten ist,

b) das zentrale Rohr (1) weist ein die Verschraubung durchgreifendes Gewinde auf und ist mit einer Mutter (9) auf dem oberen Teil (8) der Anschlußstücke fixierbar,

c) das zentrale Rohr (1) ist geteilt und weist ein Oberteil (11) und ein Unterteil (10) mit einer Innenverschraubung und einen zwischen den beiden Teilen (10, 11) einklemmbaren Schlauchverbinder (18) auf,

d) zwischen Hülse (4) und dem Unterteil (10) des zentralen Rohres (1) ist eine auf dem Unterteil (10) bewegliche Muffe (13) der Hülsenanordnung angebracht, wobei die Muffe die Preßfläche (5) trägt, sich gegen die Hülse (4) abstützt und gegenüber der Hülse gegen Verdrehen gesichert ist.

2. Chromatographiesäule nach Anspruch 1, **dadurch gekennzeichnet,** daß das Verschraubungsoberteil (8) und die Hülse (4) je miteinander wirkende Gewinde besitzen, wobei die Hülse (4) das Verschraubungsoberteil (8) nach oben durchgreift und wobei die Mutter (9) auf die Hülse (4) stößt.

3. Chromatographiesäule nach mindestens einem der Ansprüche 1 oder 2, **dadurch gekennzeichnet,** daß die Preßflächen (3, 5) gegensinnig geneigte Kegelflächen sind.

4. Chromatographiesäule nach Anspruch 3, **dadurch gekennzeichnet,** daß zwischen Kegelober- (5) und Kegelunterteil (3) eine O-Ringdichtung (6) angeordnet ist.

5. Chromatographiesäule nach Anspruch 3, **dadurch gekennzeichnet,** daß zwischen Kegelober- (5) und Kegelunterteil (3) eine Kunststofflippendichtung, vorzugsweise aus PTFE, eingesetzt ist.

6. Chromatographiesäule nach Anspruch 4, **dadurch gekennzeichnet,** daß unterhalb der aus Gummi bestehenden O-Ringdichtung (6) ein Abstreifring (14) aus Kunststoff auf dem Kegelunterteil (3) ruht, der eine scharfkantige Krone (15) aufweist.

7. Chromatographiesäule nach mindestens einem der Ansprüche 1 bis 6, **dadurch gekennzeichnet,** daß die Hülse (4) im Verschraubungsoberteil (8) verschieblich und an diesem eine Verstellmutter (20) angeordnet ist, die durch ein Fenster (19) im Verschraubungsoberteil betätigbar ist und die sich gegen den oberen Rand des Oberteils (8) einerseits und gegen den Flansch (16) andererseits abstützt.

**Claims**

1. Chromatographic column consisting of a cylinder made from glass with sealing connecting pieces (7, 8), whereby the cylinder has flanges on each end with the help of which the connecting pieces (7, 8) are connectable with the cylinder by means of a screw connection and the connecting pieces (7, 8) have a central tube (1, 10, 11) with a pressing surface (3) which is gripped around by a sleeve arrangement (4, 13) with a corresponding counter-directed pressing surface (5) and whereby, between the pressing surfaces (3, 5), is arranged a squeezable sealing (6) which makes possible a free visual control of the sealing, and a sleeve (4) of the sleeve arrangement is supported on the screw connection, characterised by the following features:

a) the central tube (1) has a frit recess (2) in which a frit is held,

b) the central tube (1) has a thread engaging through the screw connection and is fixable with a nut (9) on the upper part (8) of the connection pieces,

c) the central tube (1) is divided and has an upper part (11) and a lower part (10) with an internal screw connection and a flexible pipe connector (18) clampable between the two parts (10, 11),

d) between sleeve (4) and the lower part (10) of the central tube (1) is provided a muff (13) of the sleeve arrangement movable on the lower part (10), whereby the muff carries the pressing surface (5), supports itself against the sleeve (4) and is secured against twisting with regard to the sleeve.

2. Chromatographic column according to claim 1, characterised in that the screw connection upper part (8) and the sleeve (4) each possess threads acting with one another, whereby the sleeve (4) engages through upwardly the screw connection upper part (8) and whereby the nut (9) impinges on the sleeve (4).

3. Chromatographic column according to at least one of claims 1 or 2, characterised in that the pressing surfaces (3, 5) are counter-inclined conical surfaces.

4. Chromatographic column according to claim 3, characterised in that an O-ring sealing (6) is arranged between cone upper (5) and cone lower part (3).

5. Chromatographic column according to claim 3, characterised in that, between cone upper (5) and cone lower part (3), is inserted a synthetic material lip sealing, preferably of PTFE.

6. Chromatographic column according to claim 4, characterised in that, below the O-ring sealing (6) consisting of rubber, there rests a wipe-off ring (14) of synthetic material which has a sharp-edged crown (15).

7. Chromatographic column according to at least one of claims 1 to 6, characterised in that the sleeve (4) is displaceable in the screw connection upper part (8) and on this is arranged an adjustment nut (20) which is operable through a window (19) in the screw connection upper part and which supported against the upper edge of the upper part (8), on on the one hand, and against the flange (16), on the other hand.

**Revendications**

1. Colonne de chromatographie, comprenant un cylindre fabriqué en verre et pourvu de pièces de raccord étanches (7, 8), dans laquelle le cylindre présente des brides terminales à l'aide desquelles les pièces de raccord (7, 8) peuvent être reliées au cylindre par un raccord à vis, les pièces de raccord (7, 8) présentant un tube central (1, 10, 11) ayant une surface de pressage (3) qui est entouré par un agencement à douille (4, 13) présentant une surface de pressage (5) correspondante, en sens opposé, et dans laquelle, entre les surfaces de pressage (3, 5), est agencé un organe d'étanchéité (6) écrasable qui permet un contrôle visuel libre de l'organe d'étanchéité, une douille (4) de l'agencement à douille étant en appui sur le raccord à vis, caractérisée par les particularités suivantes
   a) le tube central (1) présente un évidement (2) dans lequel est maintenue une fritte,
   b) le tube central (1) présente un filet passant à travers le raccord à vis et il peut être fixé par un écrou (9) sur la partie supérieure (8) des pièces de raccord,
   c) le tube central (1) est divisé et il présente une partie supérieure (11) et une partie inférieure (10) avec un taraudage et un raccord de tuyaux souples (18) qui peut être pincé entre les deux parties (10,11),
   d) entre la douille (4) et la partie inférieure (10) du tube central (1) est agencé un manchon (13), déplaçable sur la partie inférieure (10), de l'agencement à douille, le manchon portant la surface de pressage (5), s'appuyant contre la douille (4) et étant assuré contre une rotation par rapport à la douille.

2. Colonne de chromatographie suivant la revendication 1, caractérisée en ce que la partie supérieure (8) du raccord a vis et la douille (4) présentent des filets qui coopèrent, la douille (4) passant à travers la partie supérieure (8) du raccord à vis vers le haut, l'écrou (9) butant sur la douille (4).

3. Colonne de chromatographie suivant au moins l'une des revendications 1 et 2, caractérisée en ce que les surfaces de pressage (3, 5) sont des surfaces coniques inclinées en sens opposés.

4. Colonne de chromatographie suivant la revendication 3, caractérisée en ce qu'un organe d'étanchéité à joint torique (6) est agencé entre la partie supérieure conique (5) et la partie inférieure conique (3).

5. Colonne de chromatographie suivant la revendication 3, caractérisée en ce qu'un organe d'étanchéité à lèvres en matière synthétique, de préférence en PTFE, est introduit entre la partie supérieure conique (5) et la partie inférieure conique (3).

6. Colonne de chromatographie suivant la revendication 4, caractérisée en ce que, en dessous de l'organe d'étanchéité en forme de joint torique (6) constitué de caoutchouc, un anneau de raclage (14) en matière synthétique, qui présente une couronne (15) à arête vive, repose sur la partie inférieure conique (3).

7. Colonne de chromatographie suivant au moins l'une des revendications 1 à 6, caractérisée en ce que la douille (4) est agencée de manière déplaçable dans la partie supérieure (8) du raccord à vis et en ce que sur celle-ci est agencé un écrou de réglage (20) qui peut être actionné à travers une fenêtre (19) dans la partie supérieure du raccord à vis et qui prend appui contre le bord supérieur de la partie supérieure (8), d'une part, et contre la bride (16), d'autre part.

Fig 1

Fig 2

Fig 3

Fig 4

Fig 5

Fig 6

Fig 7

Fig 8